# EUROPEAN PATENT APPLICATION

(11) **EP 1 329 706 A1**
(43) Date of publication of application: **23.07.2003**
(21) Application number: 03000666.2
(22) Date of filing: 16.01.2003
(51) Int. Cl.: G01N 15/14

(54) **Rapid imaging of particles in a large fluid volume through flow cell imaging**

(30) Priority: 17.01.2002 US 47985
(71) Applicant: Becton, Dickinson and Company, Franklin Lakes, New Jersey 07417-1880 (US)
(72) Inventor: Bachur, Nicholas R., Jr., Monkton, Maryland 21111 (US)
(74) Representative: von Kreisler, Alek, Dipl.-Chem.

(57) **Abstract**

The present invention provides a method of and an apparatus for the rapid imaging of particles such as, for example, cells, in a flow volume. The present invention enables convenient, automated analysis of particles in a two-dimensional imaged frame confined by the walls of a thin, transparent, three-dimensional flow cell.

## Description

### BACKGROUND OF THE INVENTION

### Field of the Invention

The present invention relates generally to flow cell imaging and, more particularly, to a method of microscopic analysis of particles in a two-dimensional imaged frame. The present invention also relates to an apparatus useful in such method.

### Discussion of the Background

Automated liquid flow systems have been used to analyze and image cells. Such systems have found particular application for blood cell analysis in the form of cell counters, hematology analyzers and flow cytometry systems. Cell counters quantify cells and provide the size of cells in suspension. Hematology analyzers go a step further by providing counts on major subsets of white blood cells such as granulocytes and/or lymphocytes, platelets and on subsets of red blood cells. Hematology analyzers also measure hemoglobin and additional parameters derived from these basic measured parameters or combinations of these parameters. Flow cytometry systems measure normal and abnormal cells and find application in tracking patients with abnormal cells. Flow cytometers are designed to obtain specific morphologic information for individual particles, on the basis of optical signals obtained from parts of the particles to be analyzed, by optically scanning particles flowing in a sheath flow with a fine focused laser beam in the direction crossing the flow direction of the particles. Flow cytometers are used in research, and more expensive versions are often equipped with cell sorting capability. Flow cytometry systems require significant sample preparation by a trained operator. Hematology analyzers are typically dedicated flow cytometers or impedance counters with automated sample preparation designed for high volume analysis.

With respect to flow cytometry systems, one of the disadvantages is that they are slow in operation. Another disadvantage is the need for a sheath fluid to keep the particles of interest, *i.e*., cells, in the center of the focal plane as the particles flow past the reader that is part of the flow cytometry system. In addition, flow cytometry systems must generally be cleaned and decontaminated from exposure to hazardous biological materials. Furthermore, flow cytometer systems require time consuming and complex calibration procedures. Flow cytometry instruments are, therefore, expensive and labor intensive. Similarly, hematology analyzers are limited in their performance and are expensive.

Numerous techniques and devices have been reported in the prior art. Each of these, however, fails to address the problems solved by the present invention. For example, in U.S. Patent No. 5,159,403, Kosaka discloses a flow cytometer in which a specimen solution containing particle components flows while sheathed by a sheathing liquid. The cytometer includes a focusing reference for focus adjustment comprising an element suspended within the zone through which the specimen solution flows and is photographed.

Similarly, U.S. Patent No. 5,469,251 to Kosaka et al. discloses an apparatus for analyzing particles to detect and analyze the fluorescence of cells stained with a fluorescent dye by irradiating laser light for exciting fluorescence to a flat sample liquid flow found in a flow cell for forming a flat sheath flow. The apparatus obtains information of individual cells, *i.e*., cumulative fluorescent activity, area or roundness, degree of fluorescent emission portion, etc., based on fluorescent image signals from particles in a sample liquid by amplifying the fluorescence emitted from cells with an image intensifier.

U.S. Patent No. 5,471,294 to Ogino discloses a flow imaging cytometer that includes a light source for emitting excitation light, dichroic mirrors that form a wavelength selecting means to reflect excitation light and transmit fluorescent light, a photomultiplier for detecting fluorescence from irradiated cells and a cell flow-by decision circuit that determines whether a detected cell of interest is suited to pick up of a fluorescent image and produces a control signal for controlling an electronic shutter. This causes the cells to be irradiated with excitation light directly and with reflected excitation light. The device, however, selectively "picks up" only the fluorescent images of the cells that emit fluorescence.

U.S. Patent No. 5,644,388 to Maekawa et al. discloses on imaging flow cytometer where a plurality of images are taken for a single particle from a plurality of directions. For example, Maekawa discloses that two fluorescent images may be taken simultaneously from two different directions.

U.S. Patent No. 6,251,615 B1 to Oberhardt discloses a method of analyzing cells in a carrier solution comprising sequentially interrogating a plurality of cells in an imaging field with at least two different types of emitted light. For example, first the field of view is illuminated with one type of light, and responses are obtained and recorded or stored for subsequent use. Next, the same field of view is illuminated with a different type of light. Again, responses are obtained and recorded or stored for subsequent use.

The prior art, however, fails to address the need for a simple, rapid and accurate means of imaging particles in a flow volume. In view of the aforementioned deficiencies attendant with the prior art devices and methods, it is clear that a need exists for a method of and an apparatus for rapid imaging of particles in a flow volume through flow cell imaging. In particular, there is a need for the use of this type of microscopy imaging application in the screening and diagnosis of blood sepsis.

### SUMMARY OF THE INVENTION

The present invention enables convenient, automated microscopic analysis of particles in a two-dimensional imaged frame confined by the walls of a thin, transparent, three-dimensional flow cell. In one embodiment, there is provided a flow cell mechanism in a flow imaging device in which a specimen solution containing particles of interest is made to flow through an imaging zone of a flat flow path within the flow cell. A still image of the specimen solution is photographed in the imaging zone using illuminating means and image capturing means. The still image is then subjected to image processing whereby analysis such as classification and enumeration of the particles in the specimen solution is performed.

One object of this invention is to provide a method and apparatus for the rapid imaging of particles.

Another object of the invention is to provide a novel flow cell mechanism that solves the aforementioned problems encountered in the prior art.

Yet another object of the present invention is to utilize the images analyzed to rapidly determine if a patient is bacteremic and requires immediate antimicrobial therapy.

A first aspect of the present invention is a method of analyzing particles. The method comprises introducing a specimen containing particles of interest into an inlet port of a flow cell; moving the specimen from the inlet port to an imaging chamber of the flow cell; interrogating at least one field of view of the imaging chamber; generating a still image for the at least one field of view; and then generating a response file for the at least one field of view.

A second aspect of the present invention is an apparatus for analyzing particles. The apparatus comprises a flow cell through which a specimen containing particles to be analyzed is caused to flow; an illumination source for illuminating an image capturing zone of the specimen in said flow cell; a microscope or other imaging optic; image capturing means for capturing a still image of one or more of the particles of interest in the specimen; and image processing means for executing desired data processing based upon a set of image data obtained from the image capturing means.

A third aspect of the invention is a flow cell useful for analyzing particles. The flow cell comprises an inlet port, an imaging chamber, an optimal absorbent wick, a first channel connecting the inlet port to the imaging chamber and a second channel connecting the imaging chamber to the absorbent wick or to a waste reservoir.

The present invention is an improvement over prior art techniques, including flow cytometry. The principle difference is the use of a camera to acquire two-dimensional images of a fluid volume within a transparent flow cell rather than the counting of particles based on back- and side-scattered light measured by photomultiplier tubes acquiring luminance information for single particles in a unidimensional flow stream surrounded by a sheath liquid. Another principle difference is that the images may be used to rapidly determine whether a patient is bacteremic and, therefore, requires immediate antimicrobial therapy.

The above and other objects, advantages and features of the present invention will become more apparent from the following detailed description of the presently preferred embodiments, when considered in conjunction with the drawings, and to the appended claims.

### BRIEF DESCRIPTION OF THE DRAWINGS

FIG. 1 is a sectional view illustrating a preferred embodiment of the apparatus of the present invention.
FIG. 2 is an illustration of a flow cell according to the present invention.

### DESCRIPTION OF THE PREFERRED EMBODIMENTS

While this invention is satisfied by embodiments in many different forms, there will herein be described in detail preferred embodiments of the invention, with the understanding that the present disclosure is to be considered as exemplary of the principles of the invention and is not intended to limit the invention to the embodiments illustrated and described. Numerous variations may be made by persons skilled in the art without departure from the spirit of the invention. The scope of the invention will be measured by the appended claims and their equivalents. In describing the present invention, various terms and phrases, as defined below, will be used herein.

"Image capturing zone" refers to the area from which information on a cell or a group of cells is obtained.

"Interrogate" means to actively probe a system such as a cell or a group of cells with energy such as electromagnetic radiation (*e.g*., light) to obtain information about the system.

"Introduction" or "introducing" of the sample, *i.e*., blood, urine, etc., may be carried out by any suitable means, such as by capillary action, by injection or by flowing the solution into or through the channel of the flow cell by means such as, for example, a pump or syringe.

"Response file" refers to one or more data files, typically stored in a computer memory device, that contains retrievable information on a specific cell or group of cells. The response file may contain one type of information or a plurality of different types of information. Different information may be contained in a single file or a plurality of separate files that together comprise a response file. A plurality of response files may be organized together or separately as a computer or data file.

According to the present invention, a specimen such as blood or urine, which may or may not be suitably stained, is introduced into the inlet port of a flow cell to form a flat flow within the flow cell. The specimen flows from the inlet port, through a channel connecting the inlet port and an imaging chamber, and into the imaging chamber. In the chamber, the cells or particles in the specimen can be distributed relatively by size, if desired. For each field of view of the imaging chamber, an interrogation is easily achieved and the responses recorded by illuminating the chamber and obtaining a still image using image capturing means. The image is then analyzed by application of image processing. In this manner, qualitative information, *i.e*., size, shape color, fluorescence, etc., is obtained and stored on each cell or particle. The resulting information is then used to classify the cells or particles. The apparatus of the present invention may also be used to count cells or particles in a given population and to characterize these as would a flow cytometer. Because the imaging chamber is larger than what can be imaged at one time, the field of view moves from section to section along the entire area of the imaging chamber to capture images for each successive field of view.

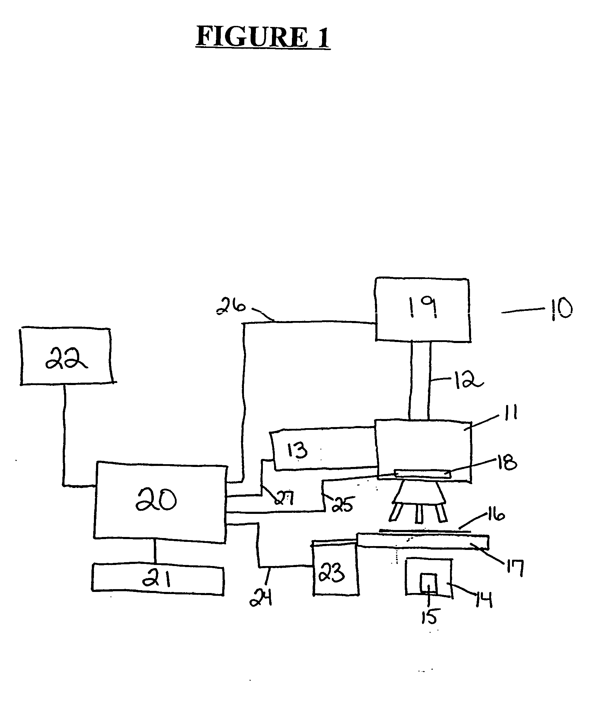

The assay device of the present invention will first be described by reference to the figures. In one embodiment, the present invention is a system, as shown in FIG. 1, for the automated microscopic analysis of particles in a two-dimensional imaged frame confined by the walls of a thin, transparent, three-dimensional flow cell. FIG. 1 is a sectional view illustrating the construction of a preferred embodiment of the present invention. The system shown in FIG. 1 uses a microscope and a digital camera to capture the signals of individual cells. In systems in which a microscope is used to examine cells, the observer simultaneously obtains all optical information seen in the image capturing zone. As shown in FIG. 1, the apparatus comprises an imaging unit 10 that includes a body housing 11, which generally comprises a microscope. Imaging unit 10 also includes a relay tube 12 and illumination sources 13 and 15. Illumination source 13 is preferably an incident light source, while illumination source 15, which is for illuminating a flow cell, is preferably a brightfield source. Illumination source housing 14 contains illumination source 15. Illumination sources 13 and 15 of selected wavelength or wavelengths are incorporated in brightfield, epifluorescent, DIC or any one of many optical modes. Non-limiting examples of suitable sources of illumination include, but are not limited to, xenon flash tubes, mercury arc lamps, laser diodes, lasers, tungsten or tungsten-halogen sources. Preferably, the brightfield source is a bulb such as 100 Watt Halogen Lamp, Part No. 500974, available from Leica Microsystems Wetzlar GmbH or an epifluorescent excitation source such as 100 Watt HBO Mercury Vapor Short Arc Lamp, Part No. HBO 100 W/2, available from Osram Sylvania Inc. The apparatus also includes a flow cell 16 fumed to have a flat flow path for causing a specimen solution containing particles of interest, *i.e*., cells or beads, to flow as a flat stream. The apparatus is adapted to pick up the images of specific cells flowing through the flow cell. A motorized stage 17 for carrying flow cell 16 is mounted on the body housing. The motorized stage is preferably an x/y stage such as Motorized x/y Stage No. 14/1114, Leica DM STC, available from Leica Microsystems Wetzlar GmbH. An x-y-z stage may also be used. Illumination source housing 14 is positioned below motorized stage 17. A hole (not shown) in motorized stage 17 allows light from illumination source 15 to pass through to flow cell 16. Various filters are mounted in filter pack 18. The filters may be for bandpass limiting or for selecting the appropriate excitation wavelength of light or the appropriate emission wavelength of light. A preferred set of filters are for fluorescence imaging and are available from Omega Optical, Inc. Incident light source 13 is optically connected to body housing 11. The incident light source provides excitation light for fluorescent imaging. Electrical cabling 27 from computer controller 20 activates or deactivates light source 13.

Any image capturing device that can capture images of particles existing in the image capturing zone of the flow cell may be used. In a preferred embodiment, the image capturing device is a digital camera. Reference numeral 19 denotes an image capturing device comprising a digital camera. Image capturing device 19 captures images of a cell or group of cells existing in the image capturing zone of the flow cell. Flow cell 16 is preferably positioned between illumination source 15 and image capturing device 19 to detect the particles of interest as the specimen solution passes through the flow cell.

FIG. 1 also shows the portions of the apparatus external to imaging unit 10. A computer controller 20, typically with a keyboard 21 and a monitor 22, is provided to control the method and apparatus and to perform image processing on the images taken by image capturing device 19. Computer 20 may be any type of computer, including general and/or special-purpose hardware-based systems, that performs the desired functions or steps. The term "computer" may be used in conjunction with or interchangeably with the term "controller" herein. In general, numerous conventional personal computers can be employed. Computer 20 is connected to motorized stage 17 through a drive 23 by line 24. Filter pack 18 is connected to computer 20 by line 25. Image capturing device 19 is connected to computer 20 by line 26. Illumination source 15 and incident light source 13 may also be connected to computer 20 (connection not shown). Control of the drive and stage, filters, image capturing device and, optionally, illumination and/or light sources may be coordinated by software programming and/or hardware in the computer to implement the method steps described herein. For example, one image capturing zone may be interrogated as described herein, the data captured and a response file created. Then the flow cell may be moved using the stage drive, and the interrogation step repeated on a different image capturing zone. Preferably, computer 20 moves motorized stage 17 to both focus (z-direction) and scan (x-y-direction) flow cell 16. Computer 20 drives the image capturing device to acquire images and controls exposure. Computer 20 also adjusts filters and light sources. Computer 20 analyzes images and calculates results including, but not limited to, DNA analysis, cell count, immunoassay, particles analysis, etc. By using the computer controller 20 in combination with the control of the light sources, the motion control system and the image capturing device, a response file can be produced and stored in the computer for the response of the cell or cells as interrogated.

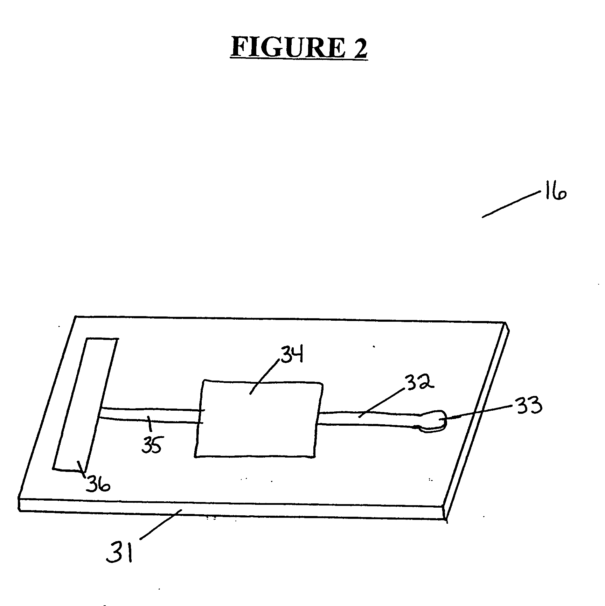

FIG. 2 is an illustration of a preferred structure of a flow cell for use in the present invention. Any thin flow cell made of a transparent material that enables imaging of particles from the outside of the flow cell may be used in the present invention. The flow cell is typically a self-contained, disposable, single-use element and may be any of a variety of types. The flow cell may have a variety of shapes, *i.e*., it may have a circular cross-section or a rectangular or elliptical cross-section. The flow cell is typically one that allows formation of a flat sample liquid flow. In the preferred embodiment seen in FIG. 2, flow cell 16 comprises a transparent, substantially flat, planar unit 31. Transparent flat unit 31 is shown with an elongate fluid channel 32 and an introduction port 33 in the form of a circular area at one end of channel 32. Unit 31 may be formed of any suitable transparent material including, but not limited to, glass, fused quartz, polystyrene, polyester and cellulose acetate. An imaging chamber 34 is formed at the other end of channel 32. Preferably, imaging chamber 34 is optically clear. Typically, imaging chamber 34 is to be approximately 20 microns thick and about 1 centimeter square, but these dimensions can vary considerably. A second channel 35 connects imaging chamber 34 to an absorbent wick 36. Absorbent wick 36 preferably houses an absorbent pad that can be used for final disposition of the sample. Absorbent wick 36, therefore, may function as a waste chamber or a receptacle for biohazardous material.

Operation of the apparatus will now be described. In general, the specimen containing the particles to be identified and counted is introduced into the flow cell through the inlet port and flows through the first channel into the imaging chamber so that a large volume may be exposed to the image capturing device at any particular moment. The specimen may be in the form of a fluid or a gas. Particles may be microorganisms, blood cells, beads and/or bacteria contained in, for example, blood, and other cells contained in, for example, urine. No particular limitations are imposed on the material, specific gravity, shape, etc. of the particles, except that their sizes should allow them to be introduced into the flow cell.

The specimen containing the particles of interest may be introduced into the flow cell by any suitable means. Unlike prior art techniques, no sheath flow for the specimen is necessary in the present invention. In one preferred embodiment, one end of a tube, typically a cylindrical sample tube, can be inserted into the inlet port. The tube has an opening at the other end (*i.e*., the end not inserted into the inlet port), and it is through this opening that the sample may be introduced with a syringe. Any suitable flow activation means may be used to move the sample through the flow cell. For example, movement through the flow cell may be accomplished by capillary force, air pressure, a vacuum, a syringe, a syringe pump, a peristaltic pump, light-activated pumping, electrophoresis, a blower, thermal pumping or other mechanism. For any of these flow activation means, feedback, such as in the form of a position transducer or flow speed sensor, would permit the controlled passage of the fluid or gas in front of the imaging chamber.

After introduction through the inlet port, the specimen flows from the inlet port through the first channel to the imaging chamber. The image capturing device views the specimen in the imaging chamber, which is illuminated by the illumination source, through an appropriate lens such as, for example, a microscope or a macro lens. The image capturing device takes successive field of view shots in order to analyze the particles flowing through the imaging chamber. For each metered volume of liquid or gas that passes through the cell, at least one image is gathered to be integrated with appropriate image analysis algorithms. Each image is then processed to determine the particles of interest within the field of view. Each particle may be identified and counted by the system of the present invention.

All of the steps of the method according to the present invention are preferably automated by the system and the sample container developed for such an analysis. For example, blood that is collected by a Vacutainer® may be transferred to the disposable flow cell by "plugging it in" to the flow cell and then letting the computerized system complete all of the fluidic transfer steps, image acquisition and analysis.

It is also possible to move the particles of interest into a collection container for further study. If desired, the particles may also be sorted by mechanisms incorporated into the outlet of the flow cell. Such mechanisms could include, but are not limited to, mechanical gating of the particle stream, electrostatic steering of the particle stream into appropriate collection vessels, laser forcep extraction and so forth. Also, the particles of interest within each image field could be further analyzed for additional information such as morphology, color, texture, etc. to determine presumptive identification of the organism so imaged by additions to the software and hardware.

The principal difference between the prior art technique of flow cytometry and the present invention is the use of an image capturing device that acquires two-dimensional images of a fluid volume within a transparent flow cell rather than the counting of particles based on back and side scattered light measured by photomultiplier tubes acquiring luminescence information for single particles in a unidimensional flow stream surrounded by a sheath liquid.

An advantage of the present invention is that the number of blood specimens that require culture and eventual subculture for identification and antimicrobial susceptibility testing can be reduced (by about 80%), thereby reducing workflow and expense in the lab. Another advantage of the system according to the present invention is the customization of the micro-molded sample flow cell for the optimized characterization of various types of samples on the same imaging and analysis platform.

In a preferred embodiment, a 10-15 ml sample of blood from a patient with suspected bacteremia is analyzed. The entire volume of blood is exposed to a fluorescent dye bound to an antibody to the fatty acid contained within all gram-negative cell walls, which is ketodeoxyoctalosonic acid, or "KDO." The entire specimen is gradually pumped through the flow cell such that every aliquot may be imaged by the camera. The flow is illuminated by an optical source of the appropriate excitation wavelength for the fluorescent dye employed. Each image taken of each volume of blood in the sample is analyzed to determine if any pixels have the emission signature of the selected dye.

Having now fully described the invention with reference to certain representative embodiments and details, it will be apparent to one of ordinary skill in the art that changes and modifications can be made thereto without departing from the spirit or scope of the invention as set forth herein.

## Claims

1. An apparatus for imaging particles comprising:
a flow cell through which a specimen containing particles to be analyzed is caused to flow;
an illumination source for illuminating an image capturing zone of the specimen in said flow cell;
an imaging optic;
image capturing means for capturing a still image of one or more of the particles of interest in the specimen; and
image processing means for executing desired data processing based upon a set of image data obtained from the image capturing means,
wherein images of the particles flowing through the flow cell are captured by the image capturing means and analyzed.

2. The apparatus of Claim 1, wherein the illumination source is a brightfield light source, and optionally further wherein the image capturing means comprises a digital camera, and optionally further wherein the flow cell is transparent.

3. The apparatus of Claim 1, wherein the flow cell comprises an inlet port, an imaging chamber, an absorbent wick, a first channel connecting the inlet port to the imaging chamber and a second channel connecting the imaging chamber to the absorbent wick.

4. The apparatus of Claim 1, wherein the specimen is selected from the group consisting of blood and urine.

5. The apparatus of Claim 1, wherein the specimen is a polymer, glass or crystalline bead.

6. A method of imaging particles comprising:
(a) introducing a specimen containing particles of interest into an inlet port of a flow cell;
(b) moving the specimen from the inlet port to an imaging chamber of the flow cell;
(c) interrogating at least one field of view of the imaging chamber;
(d) generating a still image for the at least one field of view; and then
(e) generating a response file for the at least one field of view.

7. The method of Claim 6, wherein each of steps (c) through (e) is repeated for each successive field of view.

8. The method of Claim 6, wherein a brightfield light source is used to illuminate the at least one field of view.

9. The method of Claim 6, further comprising staining the particles prior to the introducing step.

10. The method of Claim 6, wherein the particles are cells, and further comprising counting the particles from the response files; and optionally the method of Claim 6, further comprising determining the DNA content of the particles from the response files; and optionally further comprising classifying the particles according to type from the response files.
